# EUROPÄISCHE PATENTANMELDUNG

(11) **EP 0 529 466 A1**
(43) Veröffentlichungstag der Anmeldung: **03.03.1993**
(21) Anmeldenummer: 92114024.0
(22) Anmeldetag: 18.08.1992
(51) Int. Cl.: F16B 5/10, F16B 21/02, F16B 37/04, F16B 41/00

(54) **Drehverschluss für das Verbinden von Bauteilen**

(30) Priorität: 29.08.1991 DE 4128661
(71) Anmelder: CAMLOC GmbH, D-65779 Kelkheim (DE)
(72) Erfinder: Carillo-Castillo, Manuel, W-6000 Frankfurt am Main 1 (DE); Grein, Reinhold, W-6000 Frankfurt am Main 1 (DE)
(74) Vertreter: Keil, Rainer A., Dipl.-Phys. Dr.

(57) **Zusammenfassung**

Die Erfindung bezieht sich auf einen Drehverschluß (1) für das lösbare Verbinden von Bauteilen (2),(3), mit einem Verschlußbolzen (4), welcher mit einem Bolzenschaft (5) durch zueinander fluchtende Löcher (6)(7) der zu verbindenden Bauteile (2)(3) zu führen ist und sich mit einem Bolzenkopf (8) an der Außenfläche (9) des äußeren Bauteils (2) abstützt und mit einem sich auf der Innenfläche (10) des inneren Bauteils (3) abstützenden Halteglied (11), welches in einem Verriegelungsabschnitt (92) eine Durchtrittsöffnung (13) für den Bolzenschaft (5) und daran angrenzend auf seiner zum Schaftende hin weisenden Fläche in Umfangsrichtung zueinander versetzte Nockenflächen (14) aufweist, welche von radialen Vorsprüngen (15) des Bolzenschafts (5) hintergriffen sind und - im Umfangsrichtung gesehen - im Anschluß an ihre axial höchsten Nockenerhebungen (16) zunächst Rastvertiefungen (17) für die jeweilige Aufnahme der Vorsprünge (15) nach elastischer Überwindung der höchsten Nockenerhebungen (16) bei Drehung des Verschlußbolzens (4) in Verriegelungsstellung und zuletzt Anschläge (18) für die Vorsprünge (15) aufweisen, wobei die Vorsprünge (15) als auf der Zapfenaußenfläche wendelförmig verlaufende Wulste (20) ausgebildet sind.

## Beschreibung

Die Erfindung betrifft einen Drehverschluß, insbesondere Vierteldrehverschluß für das lösbare Verbinden z.B. plattenförmiger Bauteile, mit einem Verschlußbolzen, welcher mit einem Bolzenschaft durch zueinander fluchtende Löcher der zu verbindenden Bauteile zu führen ist und sich mit einem Bolzenkopf auf der Außenfläche eines äußeren Bauteils abstützt, und mit einem sich auf der Innenfläche eines inneren Bauteils abstützenden Halteglied, welches in einem Verriegelungsabschnitt eine Durchtrittsöffnung für den Bolzenschaft und daran angrenzend auf seiner zum Schaftende hin weisenden Fläche vorzugsweise zwei in Umfangsrichtung zueinander versetzte Nockenflächen aufweist, welche von vorzugsweise zwei radialen Vorsprüngen des Bolzenschafts hintergriffen sind und - in Umfangsrichtung gesehen - im Anschluß an ihre axial höchsten Nockenerhebungen zunächst Rastvertiefungen für die jeweilige Aufnahme der Vorsprünge nach elastischer Überwindung der höchsten Nockenerhebungen bei Drehung des Verschlußbolzens in Verriegelungsstellung und zuletzt Anschläge für die Vorsprünge aufweisen.

Bei derartigen bekannten Drehverschlüssen sind die Vorsprünge als radiale Kreuzstifte ausgebildet. Dies hat den Nachteil eines verhältnismäßig geringen Anzugsweges. Außerdem können die Stifte nur sehr begrenzt Kräfte aufnehmen. Beides führt dazu, daß derartige Drehverschlüsse nur eingeschränkt Einsatz finden.

Es ist ferner bekannt, bei einem Drehverschluß statt der Kreuzstifte den Bolzenschaft mit wendelförmigen Nuten auszustatten, in welche vom Rand der Durchtrittsöffnung des Verriegelungsabschnitts des Haltegliedes radial nach innen vorspringende Nasen eingreifen. Die wendelförmigen Nuten enden bolzenkopfseitig in Einrastvertiefungen für die genannten Nasen. Hierdurch wird zwar ein größerer Anzugsweg erreicht, nachteilig ist jedoch die Schwächung des Bolzenschaftes durch die Nuten, der erhöhte Herstellungsaufwand und der Umstand, daß sich die Nasen des meist aus Blech gebildeten Verriegelungsabschnittes des Haltegliedes leicht verbiegen.

Aufgabe der vorliegenden Erfindung ist es, einen Drehverschluß der gattungsgemäßen Art zu schaffen, welcher bei einfacher Herstellbarkeit einen größeren Anzugsweg vorsieht und größere Kräfte aufzunehmen gestattet.

Diese Aufgabe wird erfindungsgemäß u.a. dadurch gelöst, daß die Vorsprünge als auf der Zapfenaußenfläche wendelförmig verlaufende Wulste ausgebildet sind.

Hierdurch werden mehrere Vorteile gleichzeitig erreicht. Der Anzugsweg wird gegenüber den bekannten Kreuzstiften wesentlich vergrößert. Wegen ihrer Erstreckung in Längsrichtung des Bolzenzapfens können von den Wulsten größere Kräfte aufgenommen werden, um die beiden Bauteile zusammenzuhalten. Die Gefahr der Verformung von Führungsnasen an dem Verriegelungsabschnitt besteht nicht. Die Herstellung der Wulste ist gegenüber den bekannten wendelförmigen Nuten, welche spanabhebend hergestellt werden müssen, wesentlich vereinfacht, da der erfindungsgemäße Bolzen einschließlich der wendelförmigen Wulste bspw. im Fließpreßverfahren hergestellt werden können. Darüber hinaus ist eine Schwächung des Bolzenschaftes, wie sie bei wendelförmigen Nuten vorhanden ist, vermieden.

Die vorzugsweise beiden diametral einander gegenüberliegenden Wulste erstrecken sich nach einer besonderen Ausführungsform der Erfindung in Länsgrichtung des Bolzenzapfens über einen Umfangswinkel zwischen 50 und 70°, vorzugsweise von etwa 60°, wobei die Länge der Wulste ein Vielfaches seiner Höhe beträgt. Die Wulste haben ferner bevorzugt einen (abgerundeten) trapezförmigen Profilquerschnitt.

Die Einführung des Bolzens in die Durchtrittsöffnung des Verriegelungsabschnitts, welcher im wesentlichen aus einer kreisrunden Aussparung mit sich radial nach außen anschließenden, für den Durchtritt der Wulste bestimmten Schlitzabschnitten besteht, wird bei einer besonderen Ausgestaltung der Erfindung dadurch erleichtert, daß der Profilquerschnitt der Wulste zum Bolzenende hin abnimmt.

Beim Zusammenziehen der beiden Bauteile nimmt die aufzubringende Kraft mit wachsendem Anzugsweg zu. Um daher bei gleichem Drehmoment eine im wesentlichen konstante Kraft aufbringen zu können, ist erfindungsgemäß vorgesehen, daß der Steigungswinkel der Wülste auf der Bolzenaußenfläche variabel ist. Zweckmäßigerweise ist dabei der Steigungswinkel der Wulste am Bolzenende steiler und nimmt zum Bolzenkopf hin ab.

Um das Überführen der Wulste entlang der Nockenflächen bis in die Verriegelungsstellung sicher zu gewährleisten und dort zu halten, ist der Verriegelungsabschnitt vorzugsweise federnd an dem Halteglied gehalten. Zu diesem Zweck kann das Halteglied beispielsweise aus Federstahl bestehen.

Es ist aber auch möglich, daß das Halteglied starr ausgebildet ist und sich der Bolzenkopf über ein federelastisches Element, beispielsweise an einer Unterlegscheibe, an der Außenfläche des äußeren Bauteils abstützt. Auch auf diese Weise kann die erforderliche Spannkraft für das sichere Zusammenhalten der beiden Bauteile gewährleistet werden.

Bei einer weiteren Ausgestaltung der Erfindung ist das Halteglied als vorzugsweise einteilig aus einem Flachmaterialzuschnitt gebogener Clip auf das innere Bauteil vom Rande her aufsteckbar. Dabei kann das Halteglied einen das innere Bauteil übergreifenden Anlageschenkel und einen das innere Bauteil untergreifenden Spannschenkel aufweisen.

Die Halterung des Haltegliedes an dem inneren Bauteil kann noch dadurch verbessert werden, daß der Anlageschenkel und/oder der Spannschenkel eine Aufbiegung für das Einrasten in das Loch des inneren Bauteils aufweisen bzw. aufweist. In diesem Fall ist das Loch des inneren Bauteils für die Aufnahme des Bolzenschaftes mit entsprechend größerem Durchmesser ausgestattet.

Damit nicht nur das Halteglied an dem inneren Bauteil sondern auch der Verschlußbolzen an dem äußeren Bauteil vormontiert werden kann, ist der Verschlußbolzen vorzugsweise mittels eines in das Loch des äußeren Bauteils einschnappbaren Sicherungsrings an dem äußeren Bauteil unverlierbar gehalten.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

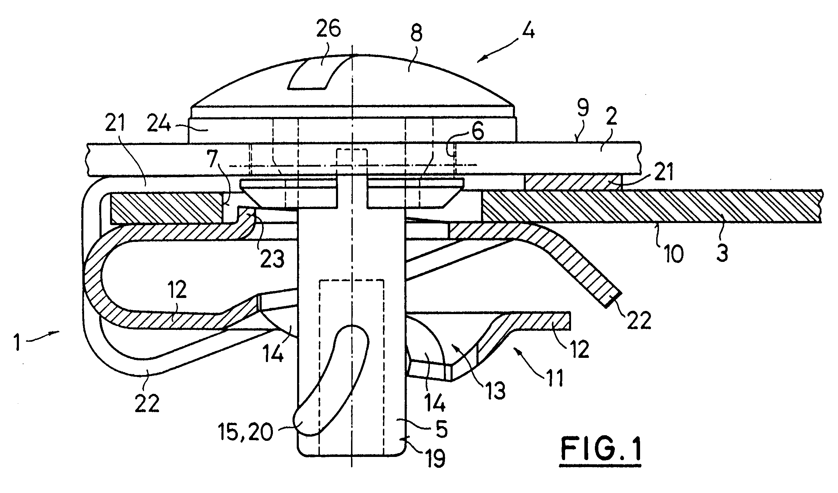

Es zeigen:
- Figur 1: In Seitenansicht, teilweise geschnitten einen die Erfindung aufweisenden Drehverschluß,

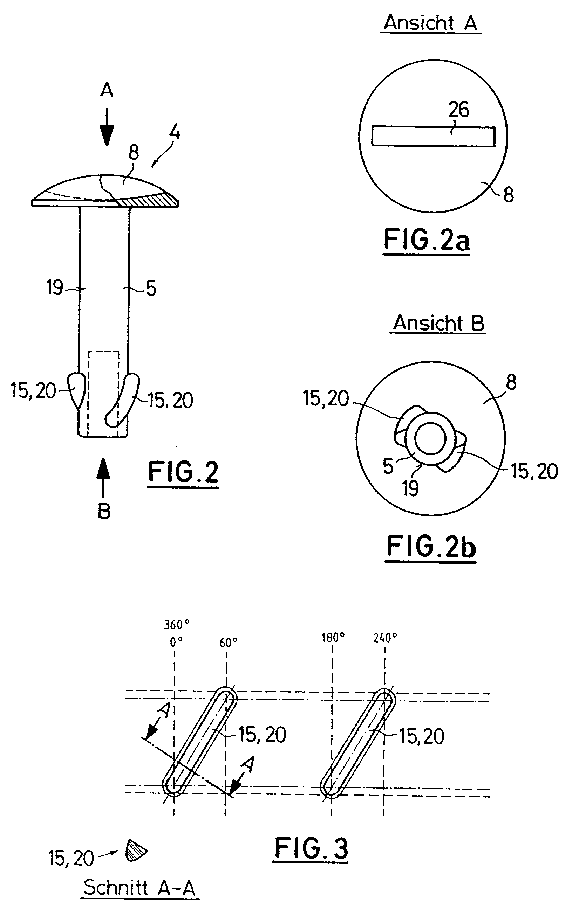

- Figur 2: in Seitenansicht einen Verschlußbolzen für einen Drehverschluß nach Fig. 1,
- Figur 2a und 2b: den Verschlußbolzen von Fig. 2 aus der Ansicht A bzw. B von Fig. 2,
- Figur 3: die Abwicklung der erfindungsgemäß vorgesehenen wendelförmig auf der Zapfenaußenfläche verlaufenden Wulste,
- Figur 4a: im Schnitt A-A von Fig. 4b ein nach der Erfindung vorgesehenes Halteglied,
- Figur 4b: das Halteglied aus der Ansicht B von Fig. 4a,
- Figur 4c: das Halteglied aus der Ansicht C von Fig. 4b,
- Figur 5: die Abwicklung der Nockenfläche eines Haltegliedes nach den Fig. 4a - 4c,
- Figur 6: in Draufsicht einen Materialzuschnitt, aus welchem ein Halteglied gemäß den Fig. 4a - 4c einstückig als Klipp mit Anlageschenkel und Spannschenkel gebogen werden kann,
- Figur 7: in Draufsicht ein Sicherungsring für den Verschlußbolzen an dem äußeren Bauteil, und
- Figur 7a: den Sicherungsring gemäß der Ansicht A von Fig. 7
Der in den Figuren dargestellte und in seiner Funktion insbesondere aus Fig. 1 erkennbare Drehverschluß 1 ist als Vierteldrehverschluß dargestellt. Er dient einer lösbaren Verbindung zweier plattenförmiger Bauteile 2 und 3. Er weist einen Verschlußbolzen 4 auf, welcher mit seinem Bolzenschaft 5 durch zueinander fluchtende Löcher 6, 7 der zu verbindenden Bauteile 2, 3 hindurchzuführen ist. Nach dem vollständigen Hindurchführen des Bolzenschaftes 5 liegt der Verschlußbolzen 4 mit seinem Bolzenkopf 8 - unmittelbar oder mittelbar - auf der Außenfläche 9 des äußeren Bauteils 2 an. Der Bolzenkopf 8 ist, um mit einem Werkzeug gedreht zu werden, mit einem Eingriffsschlitz 26 versehen. Es sind aber auch Bolzenköpfe 8 mit Kreuzschlitz, Innensechskant, Rändelknopf, Flügel- oder Ringhandhabe anwendbar.

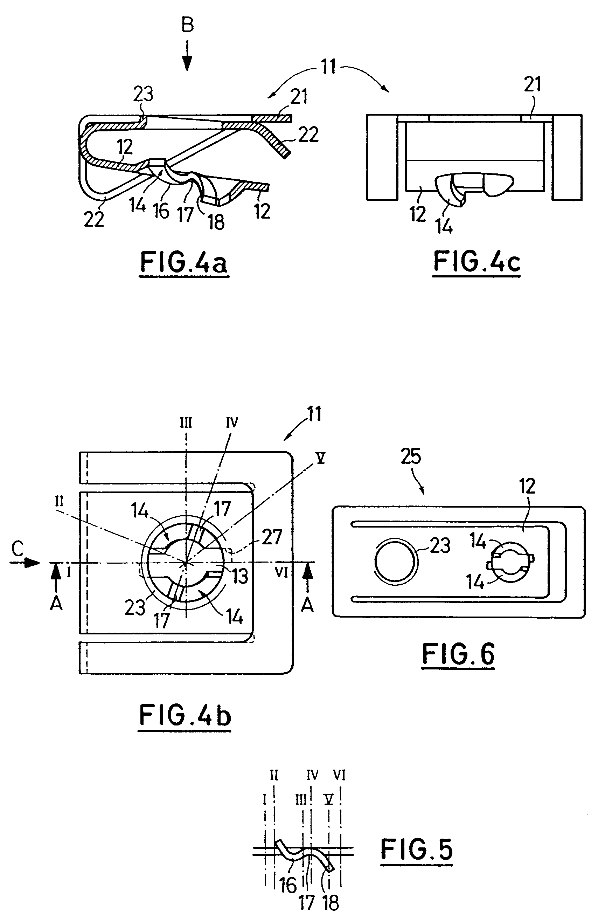

Auf der Innenfläche 10 des inneren Bauteils 3 stützt sich - unmittelbar oder mittelbar - ein Halteglied 11 ab, welches aus einem Flachmaterialzuschnitt 25, wie er in Fig. 6 dargestellt ist, einstückig gebogen ist. Das Halteglied 11 ist als Clip auf das innere Bauteil 3 vom Rande her aufsteckbar. Zu diesem Zweck hat das Halteglied 11 einen das innere Bauteil 3 übergreifenden Anlageschenkel 21 und einen das innere Bauteil 3 untergreifenden Spannschenkel 22. Der Spannschenkel 22 greift mit einer Aufbiegung 23 in das Loch 7 des inneren Bauteils 3 ein, so daß das Halteglied 11 sicher an dem inneren Bauteil 3 arretiert ist. Das Halteglied 11 weist ferner einen in Richtung des inneren Bauteils 3 elastisch spannbaren Verriegelungsabschnitt 12 auf, welcher mit einer Durchtrittsöffnung 13 für den Bolzenschaft 5 ausgestattet ist. An die Durchtrittsöffnung 13 angrenzend weist der Verriegelungsabschnitt 12 auf seiner zum Schaftende hin weisenden Fläche zwei in Umfangsrichtung um 180° versetzte, also diametral einander gegenüberliegende Nockenflächen 14 auf. Die Nockenflächen 14 haben - in Umfangsrichtung gesehen - im Anschluß an ihre axial höchsten Nockenerhebungen 16 zunächst Rastvertiefungen 17 und zuletzt Anschläge 18.

Der Verschlußbolzen 4 weist auf seiner Zapfenaußenfläche 19 als wendelförmige Wulste 20 ausgebildete radiale Vorsprünge 15 auf. Beim Durchführen des Bolzenschaftes 5 durch die Durchtrittsöffnung 13 treten die Wulste 20 durch radiale Schlitzabschnitte 27 der Durchtrittsöffnung 13 hindurch. Beim anschließenden Drehen des Verschlußbolzens 4 um seine Achse untergreifen die Wulste 20 zunächst Auflaufschrägen der Nockenflächen 14. Beim weiteren Drehen gelangen die unteren Enden der Wulste 20 in den Bereich der axial höchsten Nockenerhebungen 16 und der Verriegelungsabschnitt 12 weicht entsprechend elastisch aus. Beim weiteren Drehen rasten die Wulste 20 in Rastvertiefungen 17 ein, welche gegen ein weiteres Verdrehen des Verschlußbolzens 4 von einem Anschlag 18 begrenzt sind. Aufgrund der axialen Länge der wendelförmigen Wulste 20 hat der erfindungsgemäße Drehverschluß 1 einen entsprechend großen Anzugsweg.

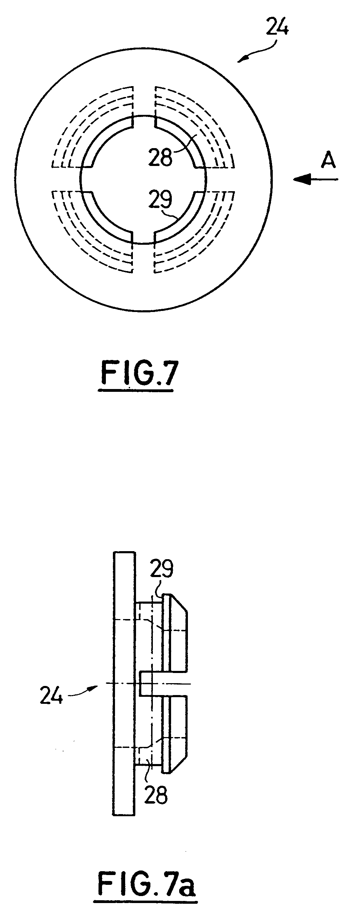

Der Verschlußbolzen 4 kann mittels eines in den Fig. 7 und 7a näher dargestellten Sicherungsrings 24 unverlierbar an dem äußeren Bauteil 2 gehalten sein. Der Sicherungsring 24 ist, nachdem der Verschlußbolzen 4 z.B. in bestimmter Drehstellung zu ihm mit dem Bolzenschaft 5 in ihn eingeführt wurde, mittels beim Einstecken in das Loch 6 des äußeren Bauteils 2 elastisch nach innen ausweichender Rastabschnitte 28 in dem Loch 6 einrastbar, indem die vorne abgeschrägten Rastabschnitte 28 mit einer hinteren Schulter 29 das äußere Bauteil 2 an seiner Innenfläche 10 hintergreifen. Der Innenquerschnitt des Sicherungsrings 24 ist bei in montiertem Zustand nicht mehr aufspreizbaren Rastabschnitten 28 kleiner als der Durchmesser des Bolzenschaftes 5 im Bereich der Wulste 20.

### Bezugszeichenliste:

- 1: Drehverschluß
- 2: äußeres Bauteil
- 3: inneres Bauteil
- 4: Verschlußbolzen
- 5: Bolzenschaft
- 6: Loch
- 7: Loch
- 8: Bolzenkopf
- 9: Außenfläche
- 10: Innenfläche
- 11: Halteglied
- 12: Verriegelungsabschnitt
- 13: Durchtrittsöffnung
- 14: Nockenflächen
- 15: Vorsprünge
- 16: Nockenerhebungen
- 17: Rastvertiefungen
- 18: Anschläge
- 19: Zapfenaußenfläche
- 20: Wulste
- 21: Anlageschenkel
- 22: Spannschenkel
- 23: Aufbiegung
- 24: Sicherungsring
- 25: Flachmaterialzuschnitt
- 26: Eingriffschlitz
- 27: Schlitzabschnitte
- 28: Rastabschnitte
- 29: hintere Schulter

## Patentansprüche

1. Drehverschluß, insbesondere Vierteldrehverschluß, für das lösbare Verbinden z.B. plattenförmiger Bauteile (2,3), mit einem Verschlußbolzen (4), welcher mit einem Bolzenschaft (5) durch zueinander fluchtende Löcher (6, 7) der zu verbindenden Bauteile (2, 3) zu führen ist und sich mit einem Bolzenkopf (8) auf der Außenfläche (9) eines äußeren Bauteils (2) abstützt, und mit einem sich auf der Innenfläche (10) eines inneren Bauteils (3) abstüzenden Halteglied (11), welches in einem Verriegelungsabschnitt (12) eine Durchtrittsöffnung (13) für den Bolzenschaft (5) und daran angrenzend auf seiner zum Schaftende hin weisenden Fläche in Umfangsrichtung zueinander versetzte Nockenflächen (14, 14) aufweist, welche von radialen Vorsprüngen (15, 15) des Bolzenschafts (5) hintergriffen sind und - in Umfangsrichtung gesehen - im Anschluß an ihre axial höchsten Nockenerhebungen (16, 16) zunächst Rastvertiefungen (17, 17) für die jeweilige Aufnahme der Vorsprünge (15, 15) nach elastischer Überwindung der höchsten Nockenerhebung (16, 16) bei Drehung des Verschlußbolzens (4) in Verriegelungsstellung und zuletzt Anschläge (18, 18) für die Vorsprünge (15, 15) aufweisen, dadurch gekennzeichnet, daß die Vorsprünge (15, 15) als auf der Zapfenaußenfläche (19) wendelförmig verlaufende Wulste (20) ausgebildet sind.

2. Drehverschluß nach Anspruch 1, dadurch gekennzeichnet, daß sich die Wulste (20) im wesentlichen in Längsrichtung des Bolzenzapfens (5) über einen Umfangswinkel zwischen 50 und 70°, vorzugsweise von etwa 60 °, erstrecken.

3. Drehverschluß nach Anspruch 1 oder 2, dadurch gekennzeichnet, daß die Wulste (20) im wesentlichen trapezförmigen Profilquerschnitt haben.

4. Drehverschluß nach einem der Ansprüche 1 bis 3, dadurch gekennzeichnet, daß der Profilquerschnitt der Wulste (20) zum Bolzenende hin abnimmt.

5. Drehverschluß nach Anspruch 1 bis 4, dadurch gekennzeichnet, daß der Steigungswinkel der Wulste (20) auf der Zapfenaußenfläche (19) variabel ist.

6. Drehverschluß nach Anspruch 5, dadurch gekennzeichnet, daß der Steigungswinkel der Wulste (20) am Bolzenende steiler ist und zum Bolzenkopf (8) hin abnimmt.

7. Drehverschluß nach einem der Ansprüche 1 bis 6, dadurch gekennzeichnet, daß der Verriegelungsabschnitt (12) federnd an dem Halteglied (11) gehalten ist.

8. Drehverschluß nach einem der Ansprüche 1 bis 6, dadurch gekennzeichnet, daß das Halteglied (11) starr ausgebildet ist und sich der Bolzenkopf (8) über ein federelastisches Element an der Außenfläche (9) des äußeren Bauteils (2) abstützt.

9. Drehverschluß nach einem der Ansprüche 1 bis 8, dadurch gekennzeichnet, daß das Halteglied (11) als vorzugsweise einteilig aus einem Flachmaterialzuschnitt (25) gebogener Clip auf das innere Bauteil (3) aufsteckbar ist.

10. Drehverschluß nach einem der Ansprüche 1 bis 9, dadurch gekennzeichnet, daß das Halteglied (11) einen das innere Bauteil (3) übergreifenden Anlageschenkel (21) und einen das innere Bauteil (3) untergreifenden Spannschenkel (22) aufweist.

11. Drehverschluß nach Anspruch 10, dadurch gekennzeichnet, daß der Anlageschenkel (21) und/oder der Spannschenkel (22) eine Aufbiegung (23) für das Einrasten in das Loch (7) des inneren Bauteils (3) aufweisen bzw. aufweist.

12. Drehverschluß nach einem der Ansprüche 1 bis 11, dadurch gekennzeichnet, daß der Verschlußbolzen (4) mittels eines in das Loch (6) des äußeren Bauteils (2) einschnappbaren Sicherungsringes (24) an dem äußeren Bauteil (2) unverlierbar gehalten ist.
